# EUROPEAN PATENT APPLICATION

(11) **EP 4 818 990 A1**
(43) Date of publication of application: **07.10.2026**
(21) Application number: 25305495.1
(22) Date of filing: 04.04.2025
(51) Int. Cl.: G06N 10/40, G06N 10/70

(54) **A METHOD FOR PROVIDING MULTIPLE ROUNDS OF ERROR CORRECTIONS FOR A QUANTUM ERROR CORRECTION CODE**

(71) Applicant: Pasqal, 91120 Palaiseau (FR)
(72) Inventor: François-Marie, LE REGENT, 91120 PALAISEAU (FR); SCHOLL, Pascal, 91120 PALAISEAU (FR); VIGNOLI, Louis, 91120 PALAISEAU (FR)
(74) Representative: Plasseraud IP

(57) **Abstract**

The invention concerns a method for providing rounds of error corrections for a quantum error correction code comprising the following steps:
- initializing a quantum register with N data qubits and a number R of sets of K ancilla qubits,
- encoding logical information on the N data qubits,
- performing R cycles of operations on the quantum register, each cycle of operations comprising entangling gates between part of the N data qubits with part of a distinct set of K ancilla qubits, and
- obtaining measurements from the N data qubits and from each of the R sets, each measurement being the result of a quantum projection operation applied on the considered qubit and of the readout of the quantum projection, the measurements obtained from the R sets enabling carrying out R rounds of error corrections on the measurements obtained from the N data qubits.

## Description

### TECHNICAL FIELD OF THE INVENTION

The present invention concerns a method for providing multiple rounds of error corrections for a quantum error correction code. The present invention also concerns an associated computing system.

### BACKGROUND OF THE INVENTION

Quantum error correction (QEC) is a set of techniques used in quantum computing to protect quantum information from errors due to decoherence and other quantum noise.

In the prospect of performing logical quantum computations at large scale, logical quantum memories have to be developed first by implementing QEC codes.

In particular, for a given QEC implementation on any hardware, a key numerical metric to assess the performance of the code implementation is the logical error rate per cycle ε_{d} at code distance d. The code distance d is defined as the weight of the minimum weight operator flipping one codeword to another.

Accessing it requires performing multiple rounds of error correction on a quantum memory, extracting the syndromes (errors) at each round (or cycle). Syndrome extraction is the process of measuring the states of auxiliary qubits, often called ancilla qubits, to gather information about errors, without disturbing the quantum information.

However, for neutral atom platforms, current technology limits the capability of the Rydberg Quantum Processing Units (QPUs) to do so.

Indeed, performing multiple rounds of syndrome extraction requires:
i) the measurement and readout of the ancilla qubits involved in a quantum operation, and
ii) the allocation of fresh ancilla qubits in some initial state.

On some quantum platforms such as superconducting qubits, these requirements are already met, as ancilla qubits can be read individually during the circuit execution and then reset to an initial state with high fidelity without disturbing too much the neighboring qubits.

However, on other types of platforms, such as neutral atom platforms, high-fidelity non-destructive mid-circuit readout schemes are still in development. Hence, implementations usually resort to a single round of QEC.

### SUMMARY OF THE INVENTION

Hence, there exists a need for a method enabling to ease performing multiple rounds of quantum error correction using ancilla qubits for all types of quantum platforms, especially neutral atom platforms.

To this end, the invention relates to a method for providing multiple rounds of error corrections for a quantum error correction code to be applied on measurements obtained from N data qubits of a quantum register, the number R of rounds being superior or equal to 2, each round implying the use of a distinct set of K ancilla qubits, the method being implemented by a computing system comprising a quantum processor and comprising the following steps:
- initializing a quantum register with N data qubits and a number R of sets of K ancilla qubits,
- encoding logical information on the N data qubits,
- performing R cycles of operations on the quantum register, each cycle of operations comprising entangling gates between part of the N data qubits with part of a distinct set of K ancilla qubits, and
- obtaining measurements from the N data qubits and from each of the R sets of K ancilla qubits, each measurement being the result of a quantum projection operation applied on the considered qubit and of the readout of the quantum projection, for each measurement at least the readout of the quantum projection being performed at the end of the R cycles of operations, the measurements obtained from the R sets of K ancilla qubits enabling carrying out R rounds of error corrections on the measurements obtained from the N data qubits.

The method according to the invention may comprise one or more of the following features considered alone or in any combination that is technically possible:
- For each measurement both the quantum projection operation and the readout are performed at the end of the R cycles of operations.
- For each measurement on an ancilla qubit, the quantum projection operation is performed at the end of the cycle of operations implying said ancilla qubit.
- The ancilla qubits have a ground state and an excited state, the quantum projection operation applied on the ancilla qubits during the first R-1 cycles of operations, being chosen so as to trigger a spontaneous decay of the ancilla qubits in the excited state to a memory state, without collapsing the ancilla qubits in the ground state, the memory state being different from the ground state.
- The quantum projection operation applied on each set of K ancilla qubits at the end of each of the first R-1 cycles of operations, comprises: the application on each entangled set of K ancilla qubits of a laser pulse tuned to be on resonance between the excited state

and an intermediate state, the intermediate state being higher in energy than the ground state, the intermediate state being such that ancilla qubits in the intermediate state spontaneously decay to the memory state.
- The N data qubits and each set of K ancilla qubits are trapped with optical tweezers generated by laser light, during the first R-1 cycles of operations, before applying a quantum projection operation on the ancilla qubits, the N data qubits being put off resonance by inducing a light-shift with the laser light of the optical tweezer of the N data qubits.
- The quantum register comprises a storage zone and an entangling zone, the R sets of K ancilla qubit being initialized in the storage zone, for each round of operations, a distinct set of K ancilla qubits being shuttled from the storage zone to the entangling zone to be entangled with the N data qubits, and being then brought back to the storage zone.
- The N data qubits are trapped separately from the R sets of K ancilla qubits by different trapping systems.
- The method also comprises a step of carrying out R rounds of error corrections on the measurements obtained from the N data qubits on the basis of the measurements obtained from the R sets of K ancilla qubits.
- The number K of ancilla qubits is equal to the number N of data qubits minus one.
- The qubits are formed from neutral atoms.

The invention also relates to a computing system comprising a quantum processor, the computing system being configured for implementing a method as described above.

### BRIEF DESCRIPTION OF THE DRAWINGS

The invention will be easier to understand in view of the following description, provided solely as an example and with reference to the appended drawings in which:
- Figure 1 is a schematic view of an example of a computing system configured for providing multiple rounds of error corrections for a quantum correction code,
- Figure 2 is a schematic view of an example of an organigram of a method for providing multiple rounds of error corrections for a quantum correction code,
- Figure 3 is a schematic view of an example of a first embodiment of the method of the invention where both the quantum projection operation and the readout are performed at the end of all the cycles of operations,
- Figure 4 is a schematic view of an example of a second embodiment of the method of the invention where, for the ancilla qubits, the quantum projection operation is performed at the end of each cycle of operations (except for the last cycle), and only the readout is performed at the end of all the cycles of operations,
- Figure 5 is a schematic example of the energy levels of an ancilla qubit of Rubidium when applying a quantum projection operation on said ancilla qubit, and
- Figure 6 is a schematic illustration differentiating the quantum projection operation from the readout.

### DETAILED DESCRIPTION OF SOME EMBODIMENTS

In the description, the terms "able to", "suitable for", and "configured for" are considered equivalent.

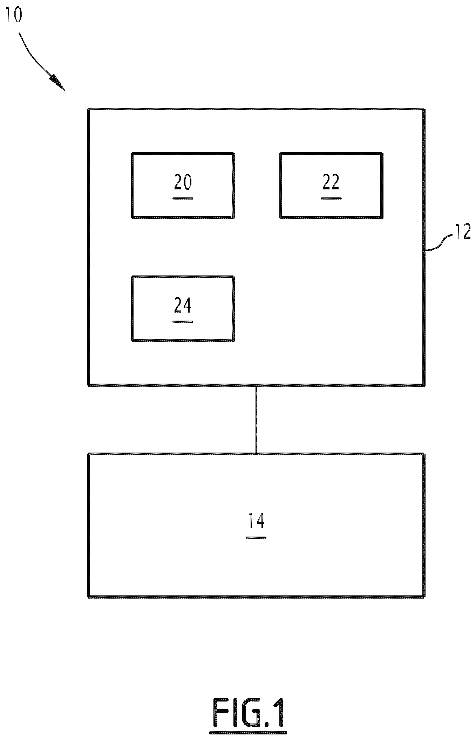

An example of a computing system 10 is illustrated on figure 1. The computing system 10 is configured to implement a method for providing multiple rounds of error corrections for a quantum correction code, that will be described hereinafter in the description.

The computing system 10 comprises a quantum processor 12 (quantum processing unit or QPU), and eventually also a classical computer 14.

In an example, the quantum processor 12 comprises a generator 20 of a quantum register, a detection unit 22 and an operation unit 24.

The generator 20 of a quantum register comprises, for example, a source of particles, a generator of trapping sites for particles, and a rearrangement unit.

In the case of neutral atoms, the source of particles comprises a vacuum chamber in which the particles (for example atoms) are located. In particular, during use, a vacuum is created in the vacuum chamber and a dilute atomic vapor is formed in the vacuum chamber. Other embodiments are nonetheless possible.

The generator of trapping sites is able to generate a laser beam which when focused generates an array of trapping sites for particles (e.g., optical tweezers). For example, the array of trapping sites can be 1-dimensional, 2-dimensional or 3-dimensional.

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM), or a digital micromirror device (DMD). In another example, the beam shaper comprises one or more acousto-optical deflector, or a device with metasurfaces.

For example, depending on the types of qubits (data qubits or ancilla qubits), the beam shapers are different. For example, data qubits and ancilla qubits are trapped separately by two different generator of trapping systems, such as one using an acousto-optics deflector, and the other one using a SLM.

The rearrangement unit is suitable to rearrange particles trapped in trapping sites, so as to obtain a desired quantum register. For example, the rearrangement unit comprises optical tweezers.

The detection unit 22 is configured to detect the presence of particle(s) in the quantum register. The detection unit 22 is, for example, a camera such as a charge-coupled device (CCD) camera, or any suitable imaging technology. For example, in the case of atoms, the camera is suitable to detect the fluorescence emitted from the atoms.

The operation unit 24 is suitable to manipulate the particles trapped in the trapping sites, and forming the qubits, so as to perform quantum operations on the qubits.

The operation unit 24 comprises for example moving optical tweezers enabling to move the qubits of the quantum register.

The operation unit 24 comprises for example laser devices enabling to send laser pulses on the qubits of the quantum register so as to perform quantum operations on the qubits, for example encoding operations, entangling operations or quantum projection operations.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327.

Typically, the quantum processor 12 uses the quantum properties of matter, such as superposition and entanglement, to perform operations on the qubits. In particular, a qubit refers to a two-level quantum system.

In a non-limiting example, a qubit may comprise two basic quantum states I0> and I1> representing the possible quantum states of the qubit. According to the superposition principle of quantum mechanics, any superposition of the form aI0> + bI1> (a and b being complex numbers and aa*+bb*=1) is a possible quantum state of the qubit. The population in the I0> state is noted P₀ = IaI² and in the I1> state is noted P₁ = IbI².

Preferably, the qubits are formed from neutral atoms.

However, the invention applies to any other types of qubits, such as superconducting qubits, Nitrogen-Vacancy centers, photons, ions, electrons, molecules and quantum dots.

The classical computer 14 comprises typically a processor comprising a data processing unit, memories and a reader for information media. Eventually, the classical computer 14 comprises a human machine interface, such as a keyboard, and a display.

In an example of implementation, the classical computer 14 interacts with a computer program product. The computer program product comprises an information medium. The information medium is a medium readable by the classical computer 14, usually by the data processing unit. The readable information medium is a medium suitable for storing electronic instructions and capable of being coupled to a computer system bus. On the information medium is stored the computer program comprising program instructions.

The computer program is loadable on the data processing unit and is adapted to entail the implementation of some steps of a method for providing multiple rounds of error corrections for a quantum correction code, that will be described later in the description.

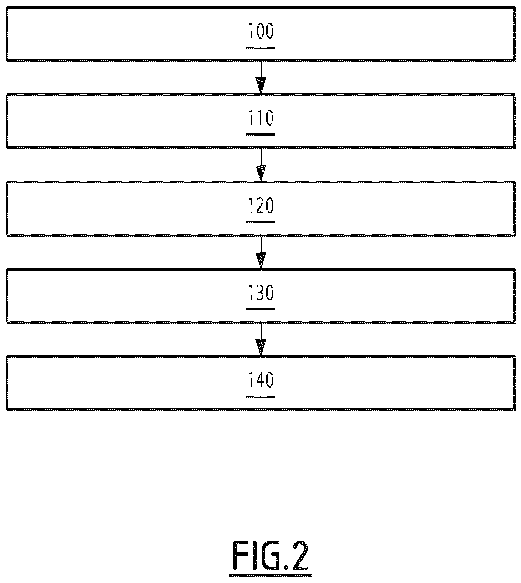

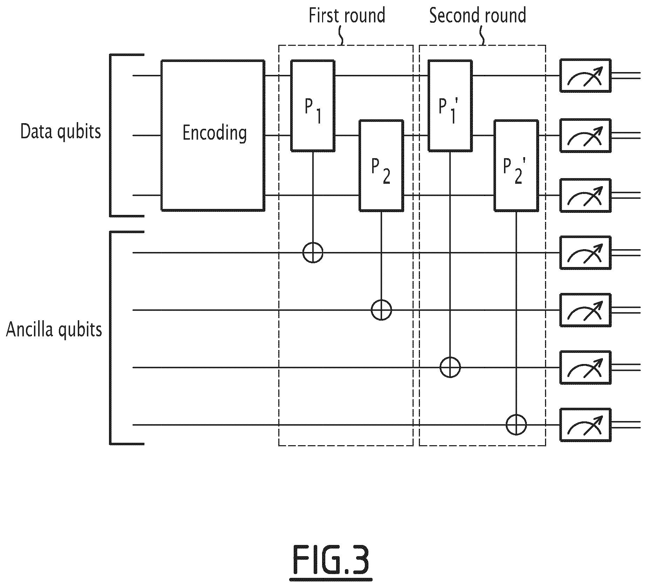

A method for providing multiple rounds of error corrections for a quantum correction code, will now be described with reference to the organigram of figure 2, and to figures 3 to 6, which illustrate examples of some steps of the method.

The quantum error correction code is intended to be applied on measurements obtained from N data qubits of a quantum register. A data qubit is defined as a qubit that encodes an information of a quantum computation.

The number R of rounds of error corrections is superior or equal to 2. Each round implies the use of a distinct set of K ancilla qubits. An ancilla qubit is a qubit that is used as an auxiliary qubit during a quantum computation. It does not hold the final output of a computation, but helps in facilitating certain operations, such as error detection.

Hence, a number R*K of ancilla qubits are used when implementing the method. So, the number of needed ancillary qubit increase linearly with the number of rounds.

The number K of ancilla qubits is dictated by the number of stabilizers to extract, depending on the QEC code. A stabilizer is defined as an operator or a set of operators defining a subspace of valid quantum states in which the quantum information is protected from certain types of errors. A stabilizer stabilizes the code space, meaning it leaves the code states unchanged when applied. Stabilizer operators are for example Pauli operators.

In an example of implementation, the number K of ancilla qubits is equal to the number N of data qubits minus one.

Each data qubit and ancilla qubit has a ground state and an excited state.

The method comprises a step 100 of initializing a quantum register with N data qubits and a number R of sets of K ancilla qubits.

For example, in the case of neutral atoms, the initialization step 100 comprises the loading and rearrangement of neutral atoms in the trapping sites so as to match a desired pattern for the N data qubits and the R sets of K ancilla qubits.

The step 100 is carried out by the quantum processor 12, and especially by the generator 20 of a quantum register.

Preferably, the quantum register comprises a storage zone and an entangling zone. The R sets of K ancilla qubit are initialized in the storage zone.

The N data qubits are initialized in the entangling zone. However, in a variant, the N data qubits could be initialized in the storage zone, and then moved to the entangling zone.

Preferably, the N data qubits are trapped separately from the R sets of K ancilla qubits by different trapping systems.

The method comprises a step 110 of encoding logical information on the N data qubits.

The encoding step 110 consists in entangling several data qubits to encode one or more logical qubits, depending on the QEC code.

For example, in the case of neutral atoms, the entangling consists in sending chosen laser pulses on the N data qubits.

The step 110 is carried out by the quantum processor 12, and especially by the operation unit 24.

The method comprises a step 120 of performing R cycles of operations on the quantum register. The end of the R cycles of operations is also called the end of the execution. The step 120 is carried out by the quantum processor 12, and especially by the operation unit 24.

Each cycle of operations comprises entangling gates between part of the N data qubits with part of a distinct set of K ancilla qubits.

For example, in the case of neutral atoms, the entangling consists in sending chosen laser pulses on the N data qubits and the set of K ancilla qubit.

Preferably, for each round of operations, a distinct set of K ancilla qubits is shuttled from the storage zone to the entangling zone to be entangled with the N data qubits, and is then brought back to the storage zone.

The method comprises a step 130 of obtaining measurements from the N data qubits and from each of the R sets of K ancilla qubits. The step 130 is carried out by the quantum processor 12, and especially by the operation unit 24 and the detection unit 22.

Each measurement is the result of a quantum projection operation applied on the considered qubit and of the readout of the quantum projection. The quantum projection (or collapse) is the projection of the state of the qubit to one of the eigenstates of the measurement operator. A way to do such a quantum projection is to transition one of the two states of the ancillary qubit to a short-lived state which triggers an event of spontaneous emission, resulting into projecting the ancillary qubit wavefunction onto a detectable state.

The readout is the translation of the quantum projection into a classical signal (for example, data acquisition with a camera).

For each measurement (data and ancilla qubits), at least the readout of the quantum projection is performed at the end of the R cycles of operations (end of the execution).

The measurements obtained from the R sets of K ancilla qubits enable carrying out R rounds of error corrections on the measurements obtained from the N data qubits.

In a first embodiment, for each measurement both the quantum projection operation and the readout are performed at the end of the R cycles of operations. In this first embodiment, for all the qubits (data and ancilla qubits), the projection operation is part of the readout, the readout being a projective readout. There is thus no need for a specific projection operation before the readout.

For example, in the case of neutral atoms, the projective readout is performed using a camera suitable to perform fluorescent imagery.

An illustrative example of this first embodiment is depicted on, figure 3 showing an example of 2 rounds of error corrections for 3 data qubits and 4 ancilla qubits (in this example, two ancilla qubits are used for each round). The 3 data qubits are represented with three lines at the top, and the 4 ancilla qubits with four single lines at the bottom. The 3 data qubits are first encoded. Then, during a first cycle of operations (first round), the 3 data qubits are entangled with 2 ancilla qubits (see boxes P1 and P2). Afterwards, during a second and last cycle of operations (second round), the three data qubits are entangled with 2 other ancilla qubits (see boxes P1' and P2'). Then, the readout (meter symbol with the arrow) of the 3 data qubits and of the two sets of 2 ancilla qubits is performed. In that case, the readout is a projective readout for all the qubits.

Only three data qubits are shown for illustrative purposes, although it is understood that, in many applications and embodiments, this number of data qubits can be different, usually higher. Similarly, the number of ancilla qubits can be different, and so can the number of cycles (rounds).

In a second embodiment, for each measurement on an ancilla qubit, the quantum projection operation is performed at the end of the cycle of operations implying said ancilla qubit. In other words, a projection operation is applied on each ancilla qubits at the end of each cycle of operations, however the readout is performed at the end of all the cycles of operations.

In particular, for each of the first R-1 cycles of operations, the projection operation is a specific operation distinct from the readout. Whereas for the last cycle of operations, the projection operation is part of the readout (projective readout). There is thus no need for a specific projection operation before the readout. This also applies for the measurement performed on the N data qubits. Hence, the readout enables performing the projection operation for the data qubit and the remaining ancilla qubits that are still in an entangled state, and perform the readout of the whole quantum register. In other words, for the qubits whose state has not been already projected in an eigenstate, the readout enables to applies a projection operation and then perform the readout. For the qubits whose state has already been projected in an eigenstate, the readout (even projective readout) does not apply another projection, but perform the readout.

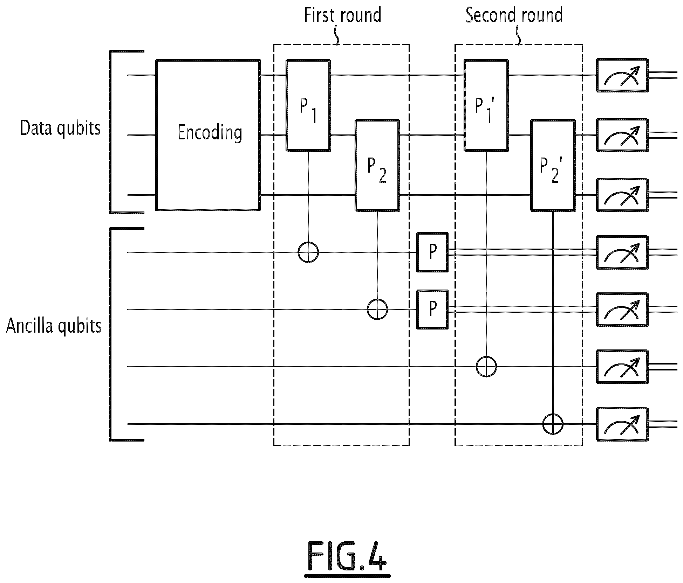

An illustrative example of this second embodiment is depicted on figure 4 showing an example of 2 rounds of error corrections for 3 data qubits and 4 ancilla qubits (in this example, two ancilla qubits are used for each round). The 3 data qubits are represented with three lines at the top, and the 4 ancilla qubits with four lines at the bottom. The 3 data qubits are first encoded. Then, during a first cycle of operations (first round), the 3 data qubits are entangled with 2 ancilla qubits (see boxes P1 and P2). Afterwards, a projection operation is applied to the 2 entangled ancilla qubits (see boxes P). Then, during the second and last cycle of operations (second round), the three data qubits are entangled with 2 other ancilla qubits (see boxes P1 and P2). Then, the readout (meter symbol with the arrow) of the 3 data qubits and of the two sets of 2 ancilla qubits is performed (i.e., on all ancilla qubits). For the qubits which have not encounter a projective operation (the 3 data qubits and the 2 last ancilla qubits), a projection operation happens as part of the readout (projective readout).

Preferably, the quantum projection operation applied on the ancilla qubits at the end of each of the first R-1 cycles of operations, is chosen so as to trigger a spontaneous decay of the ancilla qubits in the excited state to a memory state, without collapsing the ancilla qubits in the ground state. The memory state is different from the ground state.

For example, the quantum projection operation may include applying a suitable electromagnetic excitation, such as laser pulses, onto said ancilla qubits (i.e., onto the ancilla qubits used for that cycle).

Preferably, the quantum projection operation applied on the ancilla qubits at the end of each of the first R-1 cycles of operations comprises: the application on the entangled set of K ancilla qubits of a laser pulse tuned to be on resonance between the excited state and an intermediate state. The intermediate state is higher in energy than the ground state and than the excited state. The intermediate state is such that ancilla qubits in the intermediate state spontaneously decay to the memory state.

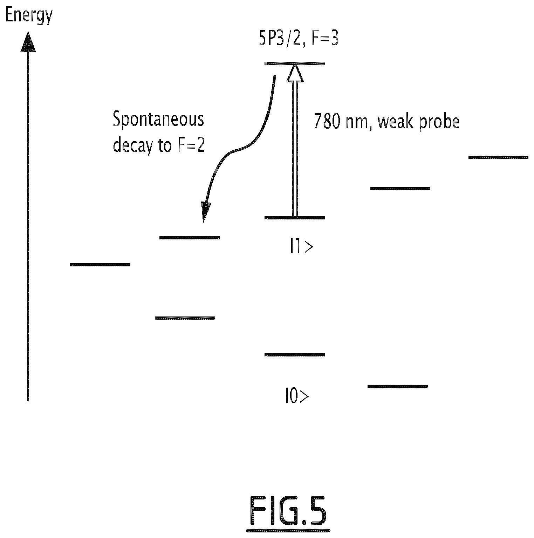

In particular, figure 5 is an example of a projection operation applied on an ancilla qubit of Rubidium. In this example, the quantum projection operation consists in applying a 780 nm weak probe (low intensity laser) to the ancilla qubit allowing the transition from the excited state |1〉 (5S1/2, F=2, mF=0) to an intermediate state (here the state 5P3/2, F=3). Then, there is a spontaneous decay to the level F=2 in a different mF than the excited state. Ancilla qubits whose state is the ground state |0〉 (F=1 here) are not affected by the projection operation. The ancilla qubits thus keep the information of this projection operation until the readout. The projective measurement has an average duration of 100 ns (the shortest projection can be 40 ns with the correct power). In this example, the atoms then remain in the chosen state for 20 seconds, allowing the measurement to be taken at the end of several rounds. Projective measurement makes it possible to guarantee the state of the ancilla for at least 10 seconds.

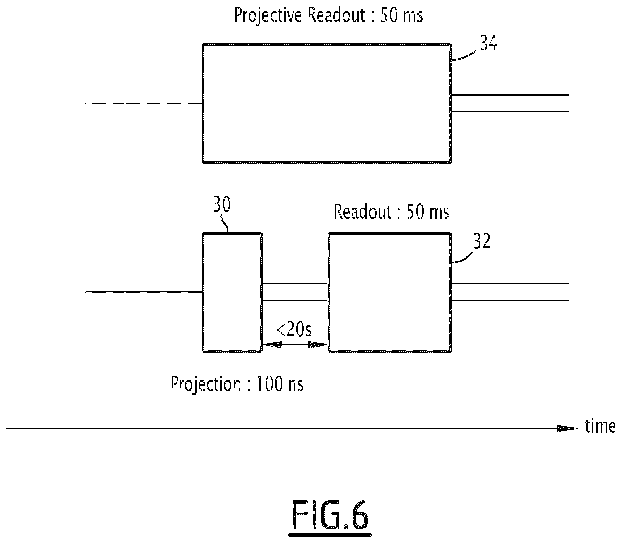

Figure 6 is a schematic example illustrating the difference between a projective operation 30 followed later by a readout 32, and a projective readout 34. The readout and projective readout correspond to the same operation and have thus an equivalent duration. However, the duration of the projection operation is much smaller than the readout, which enables to save time when performing the multiple rounds of error correction according to the second embodiment.

Preferably, during the first R-1 cycles of operations, before applying a quantum projection operation on the ancilla qubits, the N data qubits are put off resonance by inducing a light-shift with the laser light of the optical tweezer of the N data qubits. For example in alkali atoms, the optical tweezer is usually red-detuned from the first excited state, which leads to a light-shift primarily being due to the off-resonant coupling to the first excited state (5P in Rubidium).

Preferably, the method comprises a step 140 of carrying out R rounds of error corrections on the measurements obtained from the N data qubits on the basis of the measurements obtained from the R sets of K ancilla qubits. The step 140 is, for example, carried out by the classical computer 14.

In an example of implementation, the step 140 comprises the matching of the ancilla measurements with their corresponding stabilizer measurements, the decoding of the syndromes (errors), and then the interpretation of the measurements performed on the N data qubits accordingly. Stabilizer measurements are measurements performed on a set of stabilizer operators to check the integrity of a quantum state, and detect any errors that may have occurred. A stabilizer measurement involves measuring the eigenvalues of a set of stabilizer operators.

In an example of implementation, the step 140 is performed on the basis of one of the techniques described in the paper Terhal, B. M. (2015). Quantum error correction for quantum memories. Reviews of Modern Physics, 87(2), 307-346.

Hence, the above method enables to perform multiple rounds of error corrections without destructive mid-circuit readout on ancilla qubits, which is particularly adapted for neutral atom platforms.

A notable aspect of the method according to embodiments of the invention is to store ancilla qubits used in previous QEC rounds and readout the whole atomic register at once at the end of all the cycles of operations.

In particular, according to the first embodiment, both the projection operation and the readout are performed at the end of all the cycles of operations (projective readout for the whole register). In other words, both the projection operation and the readout for the register are delayed until the end of all the QEC rounds.

According to the second embodiment, for each of the first R-1 cycles of operations, the projection operation is performed at the end of the corresponding cycle of operations. This enables shelving the ancilla qubits from idling noise by bringing them into the computational basis. For example, for Rubidium 87, the ancilla qubits are encoded in the clock state which enjoys a long coherence time T1 (usually ~1-10s in current hardware) much bigger than the timescale of the quantum operations (100 ns). Hence, the ancilla qubits are only lightly affected by the delayed measurements.

The method according to embodiments of the invention is advantageous even if mid-circuit readout can be implemented on the QPU. The reason is that the method drastically reduces the duration between QEC cycles, as there is no need to image the qubits in-between cycles, especially as imaging is known to be one limiting timescale of neutral-atom platforms (on existing hardware, imaging has a typical duration of 20 milliseconds as compared to quantum operations which have a typical duration of 100 microseconds).

For some fault-tolerant quantum computing applications, further embodiments of the invention preferably include the capability of changing the QEC cycle speed, for example alternating between "regular" QEC phases comprising QEC cycles with mid-circuit readout at each cycle (but in which the delayed readout according to embodiments of the invention is not applied), and QEC phases comprising QEC cycles including a method according to the embodiments described above (such as the first embodiment or the second embodiment), which can be seen as "overclocking" the QEC cycles.

Consequently, the invention allows for a gain of time and feasibility:
- On hardware where it is impossible to perform a mid-circuit readout (because the ancilla qubit cannot be reset), this invention answers to an immediate need.
- To perform a cycle of error correction, currently the limit is the imagery process (at least 20 ms and 50 ms with the image processing). The error correction cycle is typically around 1 to 2 ms. The projection has a duration of 100 ns, so we can reduce the time of 1 cycle by at least one order of magnitude.

The person skilled in the art will understand that the embodiments and variants described above in the description can all be combined provided that they are technically compatible.

## Claims

1. A method for providing multiple rounds of error corrections for a quantum error correction code to be applied on measurements obtained from N data qubits of a quantum register, the number R of rounds being superior or equal to 2, each round implying the use of a distinct set of K ancilla qubits, the method being implemented by a computing system (10) comprising a quantum processor (12) and comprising the following steps:
- initializing a quantum register with N data qubits and a number R of sets of K ancilla qubits,
- encoding logical information on the N data qubits,
- performing R cycles of operations on the quantum register, each cycle of operations comprising entangling gates between part of the N data qubits with part of a distinct set of K ancilla qubits, and
- obtaining measurements from the N data qubits and from each of the R sets of K ancilla qubits, each measurement being the result of a quantum projection operation applied on the considered qubit and of the readout of the quantum projection, for each measurement at least the readout of the quantum projection being performed at the end of the R cycles of operations, the measurements obtained from the R sets of K ancilla qubits enabling carrying out R rounds of error corrections on the measurements obtained from the N data qubits.

2. A method according to claim 1, wherein for each measurement both the quantum projection operation and the readout are performed at the end of the R cycles of operations.

3. A method according to claim 1, wherein for each measurement on an ancilla qubit, the quantum projection operation is performed at the end of the cycle of operations implying said ancilla qubit.

4. A method according to claim 3, wherein the ancilla qubits have a ground state and an excited state, the quantum projection operation applied on the ancilla qubits during the first R-1 cycles of operations, being chosen so as to trigger a spontaneous decay of the ancilla qubits in the excited state to a memory state, without collapsing the ancilla qubits in the ground state, the memory state being different from the ground state.

5. A method according to claim 4, wherein the quantum projection operation applied on each set of K ancilla qubits at the end of each of the first R-1 cycles of operations, comprises: the application on each entangled set of K ancilla qubits of a laser pulse tuned to be on resonance between the excited state and an intermediate state, the intermediate state being higher in energy than the ground state, the intermediate state being such that ancilla qubits in the intermediate state spontaneously decay to the memory state.

6. A method according to any one of claims 3 to 5, wherein the N data qubits and each set of K ancilla qubits are trapped with optical tweezers generated by laser light, during the first R-1 cycles of operations, before applying a quantum projection operation on the ancilla qubits, the N data qubits being put off resonance by inducing a light-shift with the laser light of the optical tweezer of the N data qubits.

7. A method according to any one of claims 1 to 6, wherein the quantum register comprises a storage zone and an entangling zone, the R sets of K ancilla qubit being initialized in the storage zone, for each round of operations, a distinct set of K ancilla qubits being shuttled from the storage zone to the entangling zone to be entangled with the N data qubits, and being then brought back to the storage zone.

8. A method according to any one of claims 1 to 7, wherein the N data qubits are trapped separately from the R sets of K ancilla qubits by different trapping systems.

9. A method according to any one of claims 1 to 8, wherein the method also comprises a step of carrying out R rounds of error corrections on the measurements obtained from the N data qubits on the basis of the measurements obtained from the R sets of K ancilla qubits.

10. A method according to any one of claims 1 to 9, wherein the number K of ancilla qubits is equal to the number N of data qubits minus one.

11. A method according to any one of claims 1 to 10, wherein the qubits are formed from neutral atoms.

12. A computing system (10) comprising a quantum processor (12), the computing system (10) being configured for implementing a method according to any one of claims 1 to 11.
